# EUROPEAN PATENT APPLICATION

(11) **EP 4 414 102 A1**
(43) Date of publication of application: **14.08.2024**
(21) Application number: 24157196.7
(22) Date of filing: 12.02.2024
(51) Int. Cl.: B22F 5/04, B22F 7/06, B22F 7/08, B22F 10/25, B22F 10/66, B22F 10/80, B22F 12/90, B23K 1/00, B23K 26/342, B23P 6/00, B33Y 10/00, B33Y 30/00, B33Y 40/20, B33Y 50/00, F01D 5/00, G01B 11/24, G01B 11/25

(54) **ADAPTIVE OVERHAUL USING STRUCTURED LIGHT SINGLE DATA SET**

(30) Priority: 10.02.2023 US 202318108132
(71) Applicant: PRATT & WHITNEY CANADA CORP., Longueuil, Québec J4G 1A1 (CA)
(72) Inventor: DAULTON, Charles Trent, Burkburnett, 76354 (US); TRACY, Kevin M., Wichita Falls, 76310 (US)
(74) Representative: Dehns

(57) **Abstract**

A method of overhaul of a component (20) includes a) scanning a component (20) using structured light (103) to provide scanned data (106), b) comparing the scanned data (106) to reference data to provide additive manufacturing data, c) depositing material (62A) on the component (20) using an additive manufacturing device (24) 24 based upon the additive manufacturing data to provide a first object, d) determining predicted characteristics of the first object based upon the additive manufacturing data developed in step b) and the scanned data (106) of step a), e) comparing the predicted characteristics of the first object to the reference data to provide machining data and f) machining the first object using the machining data.

## Description

### BACKGROUND

This application relates generally to repairing a component utilizing a structured light scan of the component to develop an additive manufacturing toolpath, then using the toolpath and the scan to determine a machining toolpath.

Modern systems are including more and more complex components. As the components become more complex they become more expensive. There is thus need to repair the components rather than simply replace them.

Defects in a component may be repaired using braze filler material or weld filler. Various processes are known in the art for applying such material to a component. While these known processes have various advantages, there is still room in the art for improvement.

One type of components which are frequently subject to repair are components in a gas turbine engine.

### SUMMARY

A method of overhaul of a component includes a) scanning a component using structured light to provide scanned data, b) comparing the scanned data to reference data to provide additive manufacturing data, c) depositing material on the component using an additive manufacturing device 24 based upon the additive manufacturing data to provide a first object, d) determining predicted characteristics of the first object based upon the additive manufacturing data developed in step b) and the scanned data of step a), e) comparing the predicted characteristics of the first object to the reference data to provide machining data and f) machining 416 the first object using the machining data.

These and other features will be best understood from the following drawings and specification, the following is a brief description.

### BRIEF DESCRIPTION OF THE DRAWINGS

Figure 1A shows a gas turbine engine component to be repaired.
Figure 1B shows a detail of the Figure 1A component.
Figure 2A shows an additive manufacturing device.
Figure 2B shows a furnace associated with the Figure 2A device.
Figure 2C shows a combined system for repairing a component.
Figure 3 is a flowchart of a method according to this disclosure.
Figure 4 shows a component needing repair.
Figure 5 shows a first step in the repair process.
Figure 6 shows a subsequent step in the repair process.
Figure 7A shows a subsequent step.
Figure 7B shows a calculation of what the part is expected to be after the Figure 7A step.
Figure 8 shows subsequent machining of the Figure 7A component.
Figure 9 shows a final optional manufacturing step.

### DETAILED DESCRIPTION

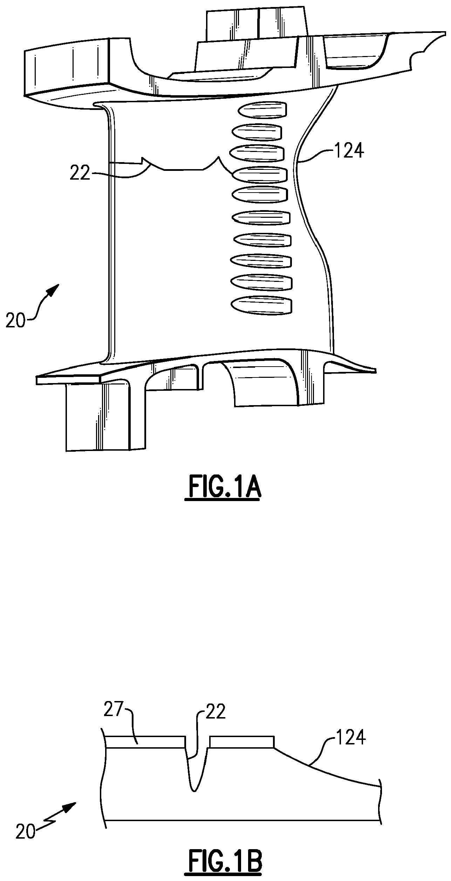

A component 20 is illustrated in Figure 1A as a turbine section static guide vane for a gas turbine engine. It should be understood that the teaching of this disclosure would extend to any number of other components for a gas turbine engine. As examples, vanes, combustor liners, compressor section components and any number of housing components may all benefit from the teachings of this disclosure. In fact, the teachings of this disclosure extend to repairing components for applications other than gas turbine engines.

The component 20 illustrated in Figure 1A has two areas that indicate some needed repair. It should be understood that components in a gas turbine engine are subject to extreme conditions. Thus, a defect 22, such as a crack, a divot, a pitted area, etc. may form. Collectively these are referred to here as a void. Further, it is possible for an area of wear 124 to form.

As shown in Figure 1B, the component 20 has a coating 27 which has been partially removed both in the area of the void 22, and in the wear area 124.

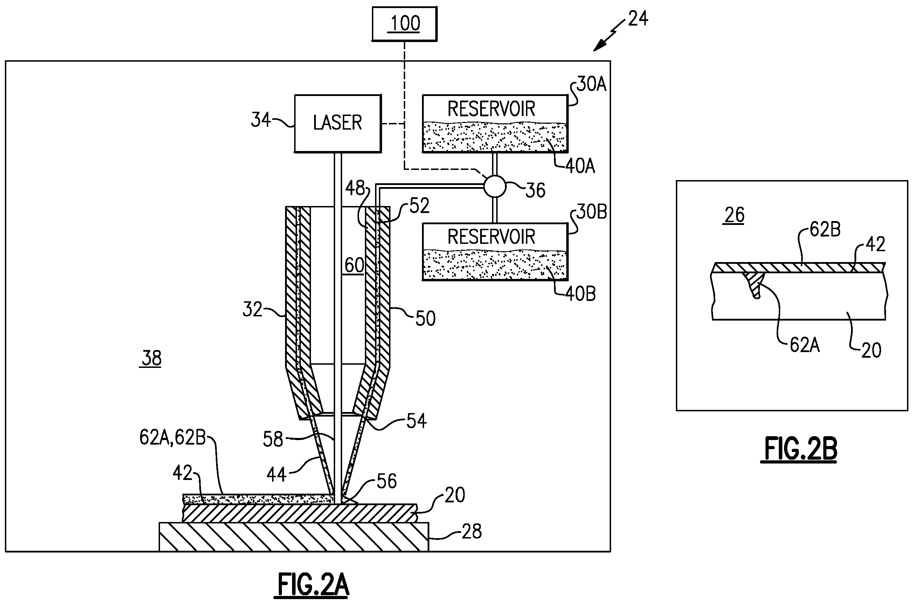

Figures 2A-2C disclose a system which might be utilized to repair the Figure 1A/1B component.

Referring to Figure 2A, the additive manufacturing device 24 may be configured as a laser material deposition device, and may be called a direct laser braze cladding machine. A component support 28 supports a component 20 to be repaired. A pair of material reservoirs 30A and 30B are provided, as is a nozzle 32, a laser 34 and a material regulation device 36, all within an internal build chamber 38. The first material reservoir 30A stores a quantity of first braze powder 40A, and second material reservoir 30B stores a quantity of second braze powder 40B, to be supplied to the nozzle 32 through the material regulation device 36 during select additive manufacturing device operations.

A control 100 is programmed to control material regulation device 36 to selectively direct the first braze powder 40A during a first mode, and selectively direct the second braze powder 40B during a second mode. The material regulation device 36 may also be controlled to selectively direct one or more combinations of the first braze powder 40A and the second braze powder 40B to the nozzle 32 during a third mode.

The nozzle 32 is controlled to deliver a (e.g., annular, conical) stream 44 of the braze powder toward a substrate of component 20. A tubular inner sidewall 48 and a tubular outer sidewall 50 define passage 52 (e.g., an annulus) fluidly coupled (shown schematically) to material flow regulator 36, and extends to a nozzle orifice 54. A distal end portion of the nozzle 32 and its inner sidewall 48 and its outer sidewall 50 may radially taper inwards as the nozzle 32 extends axially toward nozzle orifice 54. The nozzle 32 may focus the braze powder 40 to, around or about a target point 56 on, slightly above or slightly below the substrate surface 42. Of course nozzle 32 may be configured to deliver the braze powder 40 through an internal bore rather than an annulus.

Control 100 is programmed to control laser 34 to generate a laser beam 58 for sintering the braze powder 40 delivered by the nozzle 32 to the substrate 42. Herein, the term "sintering" may describe a process for coalescing powder particles together into a solid coherent mass by heating without (e.g., partial or complete) liquification of the powder. This is in contrast to, for example, a powder laser welding process where powder is melted to a liquid state (e.g., in a melt pool) by a laser beam and then solidified as a solid mass.

Laser 34 is controlled to direct the laser beam 58 to or about the target point 56 and heats the braze powder 40 for sintering. The laser beam 58 directed through an internal bore 60 of the nozzle 32 formed by the inner sidewall 48. Of course, the laser 34 may be configured to direct the laser beam 58 outside of the nozzle 32 or along another path through the nozzle 32.

The first braze powder 40A, for example, may be deposited on the component 20 to repair a first type of substrate defect such as, but not limited to, the void 22. The second braze powder 40B, by contrast, may be deposited with the component 20 to repair a second type of substrate defect such as, but not limited to, the wear region 124 of Figure 1A and Figure 1B. More particularly, the first braze powder 40A may be provided (e.g., selected, formulated, etc.) for increased wettability, flowability and/or capillary penetration. The first braze powder may thereby be particularly suited for entering and filling voids. The second braze powder 40B, on the other hand, may be provided (e.g., selected, formulated, etc.) for improved dimensional repair of the surface due to lower wettability and flowability. The second braze powder may thereby be particularly suited for forming claddings. Of course, it is contemplated the first braze powder 40A and the second braze powder 40B may be mixed together in some proportion to provide a combined braze powder with intermediate braze properties.

Examples of when the two powders could be mixed might be to achieve various proportions of the two. As an example, a designer might want a high-flow, a moderate-flow or a stiff final deposited powder. As one example, the second braze powder 40B may include higher proportions of the metal alloy powder relative to the braze material powder (e.g., 70/30). By contrast, the first braze powder 40A may include lower proportions of the metal alloy powder relative to the braze material powder (e.g., 30/70).

The first braze powder 40A may include a mixture of metal alloy powder (e.g., substrate powder) and braze material powder. The metal alloy powder may be selected to have a relatively high melting point and common or similar material properties as the substrate of component 20, e.g., an aluminum (Al) superalloy, a nickel (Ni) superalloy, a titanium (Ti) superalloy, etc. The braze material powder, on the other hand, may be selected to have a relatively low melting point, which is lower than the melting point of the metal alloy powder. The braze material powder, for example, may also include a common or similar base element as the substrate and/or the metal alloy powder (e.g., aluminum (Al), nickel (Ni) or titanium (Ti)) without the super alloying elements. The brazing material powder may also include boron (B), silicon (Si) and/or other melting point suppressants which may help facilitate melting and diffusion of the metal alloy powder with the substrate. The present disclosure, however, is not limited to the foregoing exemplary braze materials.

The second braze powder 40B may include a mixture of the metal alloy powder (e.g., substrate powder) and the braze material powder. A ratio of the metal alloy powder to the braze material powder in the second braze powder 40B may be greater than a ratio of the metal alloy powder to the braze material powder in the first braze powder 40A. For example, the second braze powder 40B may include higher proportions of the metal alloy powder relative to the braze material powder (e.g., 60/40). By contrast, the first braze powder 40A may include lower proportions of the metal alloy powder relative to the braze material powder (e.g., 30/70). The present disclosure, however, is not limited to the foregoing exemplary braze powder makeups. In other embodiments, one or more or all of the constituent materials in the first braze powder may be different that one or more or all of the constituent materials in the second braze powder.

During the braze powder deposition, the additive manufacturing device 24 of Figure 2A may dispose the respective braze powder 40 onto the substrate 42 at or about the target point 56. The laser 34 may concurrently sinter this respective braze powder 40 at the target point 56 together and/or to the underlying substrate 42.

As shown, the additive manufacturing device 24 may selectively deposit the first braze powder and/or the second braze powder over the substrate such that areas which need repair, and optionally areas adjacent and/or surrounding those areas, are filled with the sintered first braze material 62A and/or coated with the sintered second braze material 62B. In other embodiments, the first braze powder and/or the second braze powder may be deposited over an entirety of the substrate 42 and excess material may later be removed. The braze powders may be deposited as one or more layers.

Referring to Figure 2B, a furnace 26 is configured to receive the component 20 with the sintered first braze material 62A and/or the sintered second braze material 62B within furnace 26. The furnace 26 subjects the component and the sintered braze material 62A and 62B to a heat cycle, for example under vacuum and/or in a partial pressure inert gas (e.g., argon (Ar) gas) environment. During this heat cycle, the sintered braze material(s) 62 may melt and diffusion bond to the substrate 42. An example of the furnace 26 is a vacuum furnace.

The furnace temperature is selected such that the sintered braze materials 62A and 62B melts, wets and flows into defects of the substrate by capillary action. Once the sintered braze material has melted, a relatively lower temperature may be selected and held in the same heat cycle for a duration. This sustained temperature may facilitate diffusion of the melting point suppressant material, and athermal solidification, resulting in a braze diffusion bond of the sintered material to the substrate. The diffusion duration may be between four (4) hours and twelve (12) hours. This elevated temperature, however, is less than a melting point temperature of the substrate material.

The elevated temperature for the braze melt, for example, may be between 1,500°F and 2,500°F, and may be between 1,000°F and 2,400°F. The inert gas environment may have a vacuum pressure range between, for example, 0.5 microns and 0.1 microns. Of course, the foregoing heat cycle parameters may vary depending upon the specific material composition of the substrate and the braze material, dimensions (e.g., thickness) of the sintered braze materials 62A and 62B, etc.

Following the heat cycle first braze filler material 62A, may partially or completely fill the void 66. The second braze filler material 72B may provide a cladding over the substrate 42 to restore a dimensional parameter of and/or reinforce the wear region 124 and/or other regions.

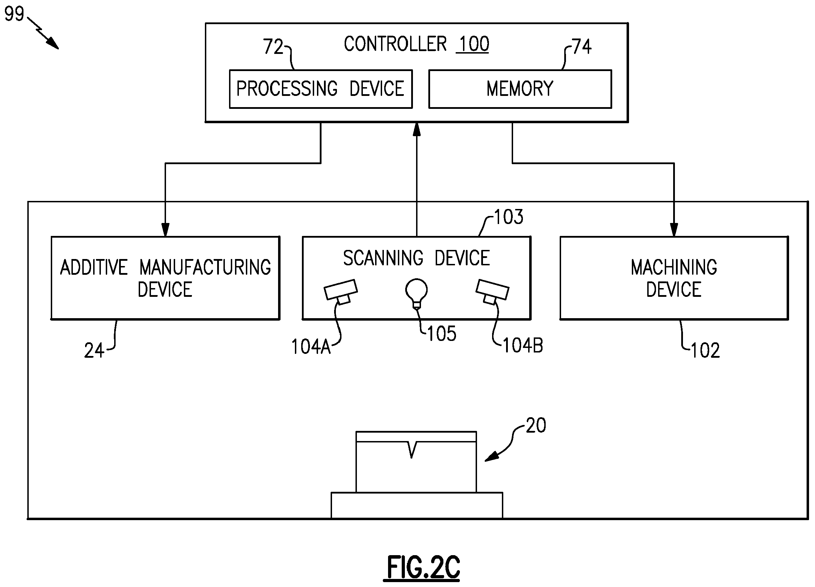

Figure 2C shows an overall system 99 having a controller 100 controlling the additive manufacturing device 24, and a machining device 102, as will be explained below. The component 20 may be scanned by scanning device 103, which may be a structured light scan, as known. The scanning device 103 would thus include at least two cameras 104A and 104B or other image capture devices, directed at the component 20 from different perspectives. A light source 105 directs light at the component 20 and the image capture devices 104A and 104B capture images. Processing device 72 may operate as known to build the images. A memory 74 may be associated with historic manufacturing device for the component 20.

The scanning device 103 may be a structured white light scanning device with a wavelength of between 400 and 700 NM or a structured blue light scanning device with a wavelength of between 450 and 495 NM.

Distortions in the pattern of light against the exterior of the component can be identified. The scanning device 103 in conjunction with processing device 72, can map the component based upon distortions in the pattern of light.

Controller 100 may be implemented with a combination of hardware and software. The hardware may include at least the processing device 72 and the memory 74. The processing device 72 may include single-core and/or multi-core processors. The memory 74 is configured to store software or execution by the processing device. The software execution may control and/or facilitate performance of the several operations described in this application. The memory 74 may be a non-transitory computer readable medium. As an example, the memory 74 can be configured to include a volatile memory and/or a non-volatile memory.

The scanning device, in combination with a controller 100, is thus able to identify a surface geometry of the component, and to map spatial coordinates for at least a portion (or the entirety) of the component 20. Such mapping would identify dimensions and location of features such as the void 22, and the wear area 124.

The scanned data may be in the form of a computer aided design model file, such as a stereolithography model file. Controller 100 may compare the mapped substrate characteristics from the scanned data with respective characteristics from reference data. The reference data may be data input from an OEM design specification for the component 20. In other words, the controller 100 may compare the mapped characteristics from the scan of the current component 20 being worked on to corresponding characteristics of the design specification.

The controller 100 may generate a solid model of the scan data to compare to a solid model of a design space component. The controller 100 thereby evaluates the current state and condition of the component 20 and determines what additive operations need to be performed. Among the determined operations could be the amount of additive manufacturing materials to be deposited, which type, where to deposit the additive manufacturing materials, paths to follow for depositing of the additive manufacturing materials, all to put the component back to being closer to the design space.

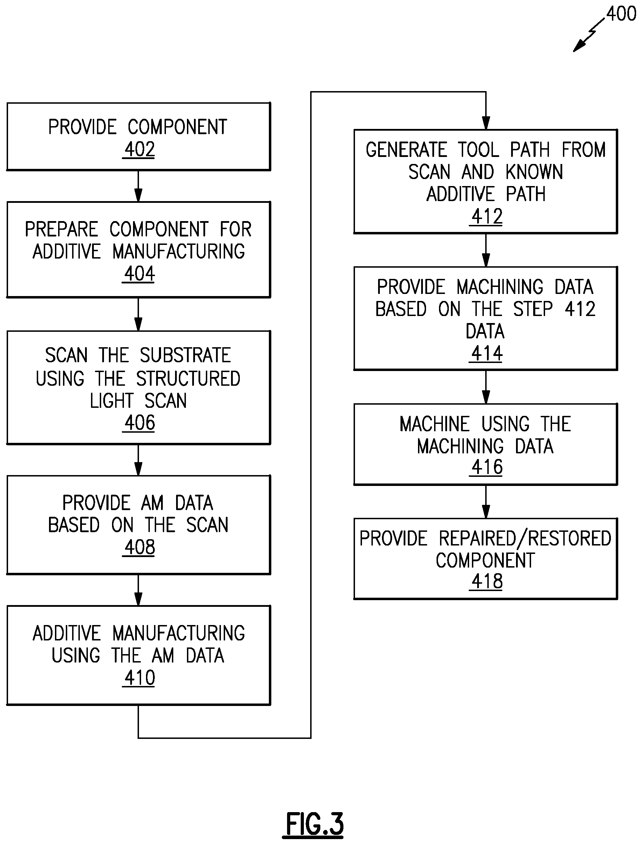

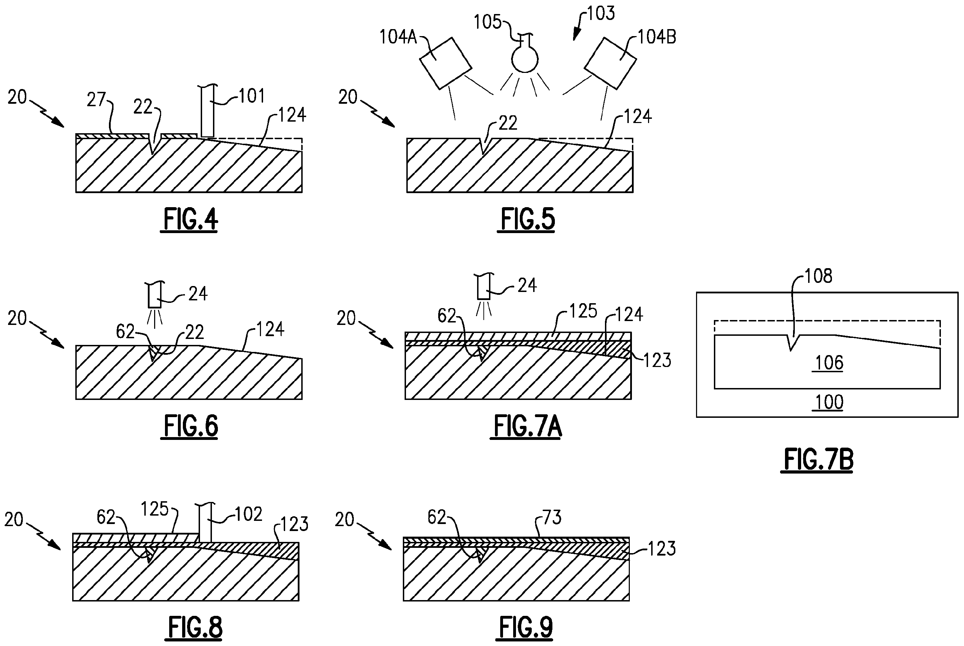

A flowchart of a method according to this disclosure is illustrated in Figure 3. The flowchart should be studied in combination with Figures 4, 5, 6, 7A, 7B, 8 and 9.

As shown in Figure 4, the component 20 to be repaired is as shown in Figure 1B. There is a void 22 and a worn area 124. There is residual coating 27. At step 402 this component is provided for repair.

At step 404 the component is then prepared for additive manufacturing repair. Any number of steps may be performed as known to prepare the component. One such step is shown in Figure 4 with a tool 101 removing the residual coating 27. Other known preparation steps may also be taken.

Then, at step 406, the component 20 is scanned. The scanning device 103 is shown with the light source 105 providing light against the surface of the component and the image capture devices 104A and 105B capturing images.

The scanned data may be aligned with reference data such as a design specification of the component or an OEM model. Because the vane may have shifted during an engine heat cycle, the individual surface of the model vanes are broken apart and aligned to the substrate model from the scan. This creates a unique geometry to correct the performance of the part without returning the part to the original casting. This unique geometry represents a desired component file. Steps may further include importing pre-braze data, reverse engineered surfacing and subsequent toolpath generation. The substrate model is essentially what the part to be repaired is now.

As step 408, the data from the scan is provided to the controller 100, and the additive manufacturing tool path is determined based upon the scan. The desired component file is what is essentially compared to the substrate model.

As shown in Figure 6, the additive manufacturing tool 24 now applies the first material 62A to the void 22.

In the Figure 7A, the additive manufacturing tool is shown supplying a second material 62B to the worn area 124. In addition, as can be appreciated, there is additional material 125 which has been deposited which is not desired on the final repaired component. Thus, there is material 123 which is desirably left and additional material 125 which is desirably removed.

The additive manufacturing machine applies material with an over application percentage to allow the following subtractive process to be successful. As an example, if a surface needs to have 0.02 inch added, the additive system may add an extra 50 percent. This results in 0.03 inch of centered buildup. After diffusion, the material may only have 0.025 inch remaining. Leaving 0.005 inch for the subtractive machining process to achieve the correct result.

Thus, as shown in Figure 7B, the scanned data 106 and a estimate 108 of the additive material having been added are utilized in the controller 100 to determine the amount of material which is to be subtracted or removed from the intermediate component.

Next, at step 412 a tool path is determined for removing the material 125 such that repaired component will approach its original state. Machining data will be developed in the controller 100 based upon the step 412 data.

Essentially, at step 412 the AM data is aligned to the substrate model. The result is then compared to reference data (e.g. the desired component file) and the subtractive machining toolpath is determined.

Then, at step 416 and as shown in Figure 8, a tool 102 may remove the additional material as shown. Finally, at step 418 and Figure 9, an outer coating 73 could be added to the repaired component 20.

Examples of the machining tools 101 and 102 may be any number of known material removable tools controlled to be movable about any number of axes.

The reference data used to develop the AM path and the machining path may be the same file or could include two distinct files. While specific reference data sets are mentioned, other reference data sets can be used.

In a featured embodiment, a method of overhaul of a component 20 includes a) scanning a component 406 using structured light 103 to provide scanned data, b) comparing the scanned data to reference data to provide additive manufacturing data, c) depositing material 410 on the component using an additive manufacturing device 24 based upon the additive manufacturing data to provide a first object, d) determining predicted characteristics of the first object based upon the additive manufacturing data developed in step b) and the scanned data of step a), e) comparing the predicted characteristics of the first object to the reference data to provide machining data; and f) machining 416 the first object using the machining data.

In another featured embodiment, a system for overhauling a component includes a scanning device 103 configured to scan a component using structured light and provide scanned data indicative of one or more characteristics of the component. An additive manufacturing device 24 is configured to deposit material on the component to provide a first object, with the additive manufacturing device controlled by additive manufacturing data. A machining device 102 is configured to remove material from the first object based upon machining data. A controller 100 is programmed to compare the scanned data with reference data to provide the additive manufacturing data. The controller is further programmed to compare the scanned data along with the additive manufacturing data to develop the machining data.

Although embodiments have been disclosed, a worker of skill in this art would recognize that modifications would come within the scope of this disclosure. For that reason, the following claims should be studied to determine the true scope and content.

## Claims

1. A method of overhaul of a component (20), comprising:
a) scanning a component (20) using structured light (103) to provide scanned data (106);
b) comparing the scanned data (106) to reference data to provide additive manufacturing data;
c) depositing material (62A) on the component (20) using an additive manufacturing device (24) based upon the additive manufacturing data to provide a first object;
d) determining predicted characteristics of the first object based upon the additive manufacturing data developed in step b) and the scanned data (106) of step a);
e) comparing the predicted characteristics of the first object to the reference data to provide machining data; and
f) machining the first object using the machining data.

2. The method as set forth in claim 1, wherein the structured light (103) comprises structured white light.

3. The method as set forth in claim 1, wherein the structured light (103) comprises structured blue light.

4. The method as set forth in any of claims 1 to 3, wherein the reference data comprises data from a design specification for the component (20).

5. The method as set forth in any preceding claim, wherein the depositing of the material (62A) in step c) fills a void (22) in the component (20).

6. The method as set forth in any preceding claim, wherein the depositing of the material (62A) forms a cladding over a worn surface on the component (20).

7. The method as set forth in claim 5, wherein the depositing of a material (62A) in step c) also forms a cladding over a substrate (42) of the component (20), a first material (62A) is utilized to fill the void (22), and a second different material (62B) is utilized to form the cladding.

8. The method as set forth in any preceding claim, further comprising removing a residual coating (27) from the component (20) to expose a surface (124) prior to step c).

9. The method as set forth in any preceding claim, wherein step c) includes depositing braze powder (40) on the component (20) and heating the braze powder (62A) with a laser (34) to sinter the braze powder (62A).

10. The method as set forth in claim 9, wherein after the sintering of step c), the component (20) is then put through a heat cycle to melt the braze powder (62A).

11. The method as set forth in any preceding claim, wherein the machining of step f) removes some of the material (62A) deposited during step c).

12. The method as set forth in any preceding claim, further comprising coating (27) a surface of a second object, wherein the second object is formed by the machining of the first object in step f).

13. The method as set forth in any preceding claim, wherein the component (20) is from a gas turbine engine.

14. A system (99) for overhauling a component (20) comprising:
a scanning device (103) configured to scan a component (20) using structured light (103) and provide scanned data (106) indicative of one or more characteristics of the component (20);
an additive manufacturing device (24) configured to deposit material (62A) on the component (20) to provide a first object, with the additive manufacturing device (24) controlled by additive manufacturing data;
a machining device (102) configured to remove material (62A) from the first object based upon machining data; and
a controller (100) programmed to compare the scanned data (106) with reference data to provide the additive manufacturing data, and the controller (100) further programmed to compare the scanned data (106) along with the additive manufacturing data to develop the machining data.

15. The system (99) as set forth in claim 14, wherein step c) includes depositing braze powder (40) on the component (20) and heating the braze powder (62A) with a laser (34) to sinter the braze powder (62A), optionally wherein after the sintering of step c), the component (20) is then put through a heat cycle to melt the braze powder (62A).
